# EUROPEAN PATENT SPECIFICATION

(11) **EP 3 457 478 B1**
(45) Date of publication and mention of the grant of the patent: **19.02.2020**
(21) Application number: 18191928.3
(22) Date of filing: 31.08.2018
(51) Int. Cl.: H01M 4/96, H01M 12/08

(54) **AIR BATTERY AND POSITIVE ELECTRODE FOR AIR BATTERY**
LUFTBATTERIE UND POSITIVE ELEKTRODE FÜR LUFTBATTERIE
BATTERIE À AIR ET ÉLECTRODE POSITIVE POUR BATTERIE À AIR

(30) Priority: 13.09.2017 JP 2017175981; 03.10.2017 JP 2017193886; 10.05.2018 JP 2018091142
(43) Date of publication of application: 20.03.2019
(73) Proprietor: Panasonic Intellectual Property Management Co., Ltd., Osaka-shi, Osaka 540-6207 (JP)
(72) Inventor: SAWADA, Koichi, Osaka-shi, Osaka 540-6207 (JP); KAWASHIMA, Tsutomu, Osaka-shi, Osaka 540-6207 (JP); OGAWA, Koji, Osaka-shi, Osaka 540-6207 (JP); OTSUKA, Yu, Osaka-shi, Osaka 540-6207 (JP)
(74) Representative: Grünecker Patent- und Rechtsanwälte PartG mbB

(56) References cited:
- US-A1- 2011 223 494
- US-A1- 2014 255 799
- US-A1- 2016 372 807

## Description

### BACKGROUND

### 1. Technical Field

The present disclosure relates to an air battery and a positive electrode for an air battery.

### 2. Description of the Related Art

An air battery is a battery cell using, as a positive electrode active material, oxygen from air and using, as a negative electrode active material, a metal or a metal compound capable of occluding and releasing metal ions. An air battery offers advantages such as a high energy density (e.g., amount of dischargeable electric energy relative to weight) and easy miniaturization and weight reduction. Thus, air batteries are attracting attention as battery cells having an energy density greater than the energy density of metal ion cells, which are currently considered to have the highest energy density.

Air batteries include a positive electrode, a negative electrode, and an electrolyte layer disposed between the positive electrode and the negative electrode. The positive electrode is typically formed of an electrically conductive material. Examples of electrically conductive materials that may be used include carbon materials, such as graphite and acetylene black. Examples of air cathodes are described in US2016/372807 A1; US 2011/223494 and US2014/255799.

### SUMMARY

Claim 1 defines a positive electrode for an air battery that enables realization of an air battery having both a high discharge capacity and a high volumetric energy density. Claims 2-11 define further advantageous aspects of the positive electrode.

In one general aspect, the techniques disclosed here feature a positive electrode for an air battery. The positive electrode for an air battery includes a porous body including carbon. The porous body includes first pores each having a pore diameter of 4 nm or more and less than 100 nm and second pores each having a pore diameter of 100 nm or more and 10 µm or less. In the porous body, a second pore volume is greater than a first pore volume. The second pore volume is a cumulative pore volume of the second pores, and the first pore volume is a cumulative pore volume of the first pores.

According to one general aspect of the present disclosure, a positive electrode for an air battery enables realization of an air battery having both a high discharge capacity and a high volumetric energy density. It should be noted that general or specific embodiments may be implemented as a cell, an electrode, a device, an apparatus, a system, a method, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Figure is a schematic cross-sectional view of an exemplary configuration of an air battery according to the present disclosure.

### DETAILED DESCRIPTION

### Underlying Knowledge Forming Basis of the Present Disclosure

Japanese Unexamined Patent Application Publication No. 2010-212198 discloses an air battery including a positive electrode including carbon. In the air battery, the carbon used in the positive electrode has a crystallite diameter of 15 Å or less, as calculated using the Scherrer equation in an X-ray diffraction measurement. Japanese Unexamined Patent Application Publication No. 2010-212198 also discloses that the carbon used in the positive electrode has a specific surface area of 750 m²/g or more and a total pore volume of 4.0 ml/g or more and 5.5 ml/g or less, as determined by mercury porosimetry.

The air battery disclosed in Japanese Unexamined Patent Application Publication No. 2010-212198, which includes a positive electrode made of carbon and a binder, has a high discharge capacity. From studies conducted by the present inventors, however, it was found that, with the positive electrode disclosed in Japanese Unexamined Patent Application Publication No. 2010-212198, swelling of the positive electrode occurs in association with discharge, which results in a reduction in volumetric energy density. That is, air batteries using a related-art positive electrode have a problem with a low volumetric energy density. The present inventors diligently performed studies to solve the problem and consequently arrived at an air battery and a positive electrode for an air battery of the present disclosure, which are described below.

### Embodiments

Embodiments of an air battery and a positive electrode for an air battery, of the present disclosure, will be described in detail below. The embodiments described below are merely illustrative and the present disclosure is not limited to the embodiments described below.

An air battery of the present embodiment includes a positive electrode for an air battery (hereinafter referred to as "positive electrode"), a negative electrode capable of occluding and releasing metal ions, and an electrolyte layer disposed between the positive electrode and the negative electrode. The positive electrode uses oxygen from air as a positive electrode active material and includes a positive electrode layer capable of oxidizing and reducing oxygen. The positive electrode may further include a positive electrode current collector that collects current for the positive electrode layer. The negative electrode includes a negative electrode layer capable of occluding and releasing metal ions. The negative electrode may further include a negative electrode current collector that collects current for the negative electrode layer. The air battery of the present embodiment may further include a separator disposed between the positive electrode and the negative electrode. Figure is a schematic cross-sectional view of an exemplary configuration of the air battery.

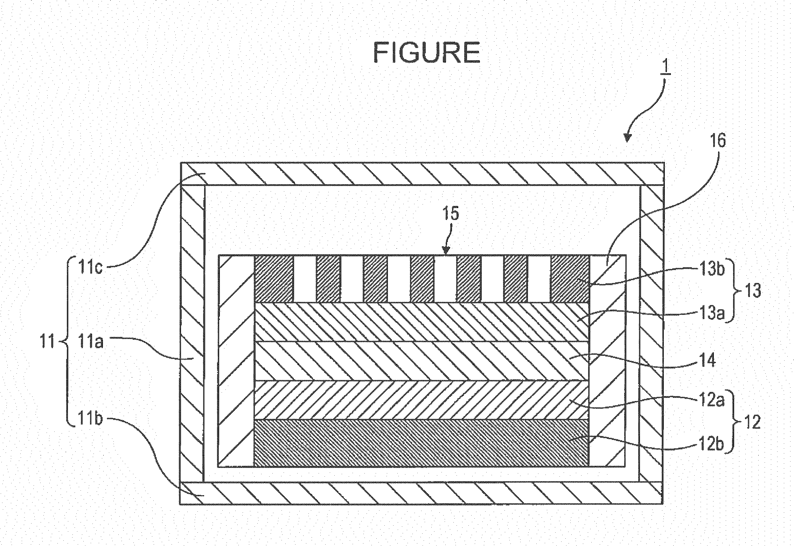

An air battery 1, illustrated in Figure, includes a cell case 11, a negative electrode 12, a positive electrode 13, and an electrolyte layer 14. The cell case 11 includes a tubular portion 11a, a bottom portion 11b, and a cover portion 11c. The tubular portion 11a has open ends at the top and the bottom. The bottom portion 11b closes the open end at the bottom of the tubular portion 11a. The cover portion 11c closes the open end at the top of the tubular portion 11a. Although not illustrated in the drawing, the cell case 11 has a configuration for intake of air. For example, the cover portion 11c may be provided with an air intake port for taking air into the cell case 11. The negative electrode 12 includes a negative electrode layer 12a and a negative electrode current collector 12b. The negative electrode layer 12a is disposed adjacent to the negative electrode current collector 12b at the side adjacent to the electrolyte layer 14. The positive electrode 13 includes a positive electrode layer 13a and a positive electrode current collector 13b. The positive electrode layer 13a is disposed adjacent to the positive electrode current collector 13b at the side adjacent to the electrolyte layer 14. The positive electrode current collector 13b is provided with air intake ports 15 for taking air into the positive electrode layer 13a. A frame 16 is provided at the side surface of the stacked structure, which includes the negative electrode 12, the electrolyte layer 14, and the positive electrode 13. Although not illustrated in the drawing, the air battery 11 may further include a separator included in the electrolyte layer 14.

A lithium-air battery will now be described. The lithium-air battery is an example of the air battery of the present embodiment. The air battery of the present embodiment, however, is not limited to a lithium-air battery and may be an air battery using a metal other than lithium.

In the case that the air battery of the present embodiment is a lithium-air battery, the cell reaction is as follows.
Discharge reaction (during use of cell)
   Negative electrode:

      2Li → 2Li⁺ + 2e⁻ (1)
   Positive electrode:

      2Li⁺ + 2e⁻ + O₂ → Li₂O₂ (2)
Charge reaction (during charging of cell)
   Negative electrode:

      2Li⁺ + 2e⁻ → 2Li (3)
   Positive electrode:

      Li₂O₂ → 2Li⁺ + 2e⁻ + O₂ (4)

As indicated by formulae (1) and (2), during discharging, the negative electrode releases electrons and lithium ions, whereas the positive electrode collects electrons while allowing oxygen, taken in from outside the cell, to react with lithium ions to produce lithium oxide. In the case that the air battery is a lithium-air battery, the lithium oxide is the discharge product. As indicated by formulae (3) and (4), during charging, the negative electrode collects electrons and lithium ions, whereas the positive electrode releases electrons, lithium ions, and oxygen.

Next, the constituents of such an air battery will be described in detail.

### 1. Positive electrode

As described above, the positive electrode includes a positive electrode layer and may further include a positive electrode current collector. The positive electrode layer and the positive electrode current collector will be described below.

### (1) Positive electrode layer

The positive electrode layer uses oxygen from air as a positive electrode active material and includes a material capable of oxidizing and reducing oxygen. The positive electrode layer of the present embodiment includes a carbon-containing electrically conductive porous body, which is an example of the material mentioned above. Carbon materials that may be used as such a porous body may have high electron conductivity. Specific examples of such carbon materials may include carbon materials typically used as a conductive agent, such as acetylene black and Ketjen black. Electrically conductive carbon black, such as Ketjen black, among other carbon materials, may be used from the standpoint of the specific surface area and the primary particle size. The specific surface area of the carbon material may be, for example, from 800 to 2000 m²/g or may be from 1200 to 1600 m²/g. When the specific surface area of the carbon material is within the above-described range, formation of the positive electrode layer, which has a specific pore structure, is facilitated. The pore structure will be described later. Here, the specific surface area is a value measured by a BET method.

Furthermore, the amount of surface functional groups of the carbon included in the porous body may satisfy a specific range, which will be described later. Thus, the carbon material used in the production of the porous body may be appropriately selected so that the amount of surface functional groups of the carbon included in the porous body can be within the specific range. The carbon material may be a mixture of a plurality of carbon materials each of which has an amount of surface functional groups different from the amounts of surface functional groups of the other materials. For example, by appropriately adjusting the mixing ratio of two or more carbon materials each of which has an amount of surface functional groups different from the amount of surface functional groups of the other material or materials, a porous body having an amount of surface functional groups of carbon satisfying a specific range can be achieved.

The porous body included in the positive electrode layer may include pores having a pore diameter of 4 nm to 10 µm. Here, in the porous body, the first pores are defined as pores having a pore diameter of 4 nm or more and less than 100 nm, and the second pores are defined as pores having a pore diameter of 100 nm or more and 10 µm or less. In addition, in the porous body, the first pore volume is defined as a cumulative pore volume of the first pores and the second pore volume is defined as a cumulative pore volume of the second pores. In the present embodiment, in the porous body, the second pore volume is greater than the first pore volume. That is, in the air battery of the present embodiment, the pore volume of the porous body included in the positive electrode layer is such that the proportion of the second pores, which have larger pore diameters, is greater than the proportion of the first pores, which have smaller pore diameters. In other words, the positive electrode layer includes a porous body in which an abundance of large-diameter pores is present.

As described above, in a lithium-air battery, lithium oxide is produced in the positive electrode during discharging. The lithium oxide is produced and accumulates in void portions of the positive electrode layer, that is, in the pores of the porous body. In air batteries of the related art, the porous body included in the positive electrode has an abundance of pores having relatively small pore diameters. In positive electrodes of the related art having such a configuration, after lithium oxide is deposited on the small pores of the porous body, the lithium oxide grows to be large within the small pores as the capacity increases, and as a result, the pores of the porous body expand, which leads to swelling of the positive electrode. In contrast, as described above, in the positive electrode of the present embodiment, the porous body includes the first pores, which are small pores, and the second pores, which are large pores, and the second pore volume is greater than the first pore volume. With this configuration, in the positive electrode of the present embodiment, during discharging, lithium oxide is deposited on the small pores (first pores), and also, lithium oxide is deposited on the large pores (second pores). The second pore volume is greater than the first pore volume and thus has a sufficient volume for storing deposited lithium oxide. Thus, lithium oxide that grows to be large can be stored within the second pores. Thus, the positive electrode of the present embodiment is resistant to swelling of the positive electrode that may be caused by growth of discharge products. As a result, the air battery of the present embodiment has an improved volumetric energy density compared with air batteries of the related art.

In order to further increase the discharge capacity and the volumetric energy density, the sum of the first pore volume and the second pore volume may be large. Specifically, the sum of the first pore volume and the second pore volume is a cumulative pore volume of the first pores and the second pores. In the present embodiment, the sum of the first pore volume and the second pore volume may be 2.6 cm³/g or more or may be 3.3 cm³/g or more. When the sum of the first pore volume and the second pore volume is increased, the reaction interfaces, where lithium oxide is produced, and the storage space for lithium oxide are both increased in the positive electrode. Thus, the air battery, which includes such a positive electrode, has a further improved discharge capacity and a further improved volumetric energy density. In addition, the sum of the first pore volume and the second pore volume may be 4.0 cm³/g or less.

The range of the second pore volume is not particularly limited. In order to obtain an even higher discharge capacity and to improve the volumetric energy density, however, the second pore volume may be large. For example, the second pore volume may be 1.4 cm³/g or more or may be 2.1 cm³/g or more. When the second pore volume is increased, the storage space for storing lithium oxide is increased, and as a result, the positive electrode is further resistant to swelling of the positive electrode. In addition, the second pore volume may be 3.0 cm³/g or less.

Here, the first pore volume is designated as V1 and the second pore volume is designated as V2. The following relationship may be satisfied: V2/V1 ≥ 1.1, V2/V1 ≥ 1.2, V2/V1 ≥ 1.4, or V2/V1 ≥ 1.5. Further, the following relationship may be satisfied: V2/V1 ≥ 1.6, V2/V1 ≥ 1.8, V2/V1 ≥ 2.5, V2/V1 ≥ 2.6, or V2/V1 ≥ 3. A large V2/V1 value means that the positive electrode has an abundance of pores having large pore diameters on the order of micrometers. Thus, such a positive electrode has a sufficient storage space for storing lithium oxide and, as a result, is resistant to swelling of the positive electrode and thus improves the volumetric energy density. It is also possible that V1 and V2 may satisfy V2/V1 ≤ 5.

The amount of surface functional groups of the carbon included in the porous body is, for example, 0.3 mmol/g or more and 1.4 mmol/g or less. In the present disclosure, the surface functional groups of carbon are acidic functional groups, and examples of such surface functional groups include carboxyl groups, phenolic hydroxyl groups, and lactone groups. A document "Wong et al, Chemistry of Materials, 2016, 28 (21), pp 8006 - 8015" discloses that the adsorption rate at which oxygen and lithium ions are adsorbed onto the surface of carbon changes depending on the surface functional groups. When the adsorption rate varies, the deposition rate varies. The adsorption rate is a rate at which oxygen and lithium ions are adsorbed onto the surface of carbon. The deposition rate is a rate at which lithium oxide is deposited, which occurs on the surface of the porous body as a result of the discharge reaction. That is, regions where lithium oxide is deposited at a high rate and regions where lithium oxide is deposited at a low rate are both present in the porous body of the positive electrode layer. In other words, regions where lithium oxide tends to be deposited and regions where lithium oxide does not tend to be deposited are both present. The carbon included in the porous body of the present embodiment includes surface functional groups in an amount within the specific range described above. This results in a balanced disposition, in the porous body, of regions where lithium oxide tends to be deposited and regions where lithium oxide does not tend to be deposited. When the porous body of the positive electrode layer of the present embodiment has such a structure, clogging of the positive electrode layer by lithium oxide is prevented. That is, when the positive electrode layer of the present embodiment has such a structure, the positive electrode layer is able to cause a discharge reaction sufficiently in regions where discharge products tend to be deposited and is able to ensure that regions where discharge products do not tend to be deposited serve as voids for diffusion of air and metal ions. As a result, the air battery of the present embodiment has a further improved volumetric energy density compared with air batteries of the related art.

The amount of surface functional groups of the carbon included in the porous body may be 0.38 mmol/g or more. Further, the amount of surface functional groups of the carbon included in the porous body may be 1.34 mmol/g or less.

In order to further increase the discharge capacity and the volumetric energy density, the volume resistivity of the positive electrode layer in a direction parallel to a major surface of the positive electrode layer, as measured on the major surface, may be low. The volume resistivity of the positive electrode layer, as determined herein, is a value measured on the major surface of the positive electrode layer as described above and is measured by using a four-probe method. The four-probe method does not require formation of electrodes on the object to be measured, and thus a measurement of the volume resistivity on the major surface of the positive electrode layer can be made without separately producing measurement samples. For example, the volume resistivity may be 5500 mOhm·cm or less, 5126 mOhm·cm or less, 2500 mOhm·cm or less, or 2162 mOhm·cm or less. When the positive electrode layer has a further reduced electrical resistance, the reaction interfaces, where lithium oxide is produced, are increased. Thus, the positive electrode including the positive electrode layer having a low volume resistivity retains an abundance of areas where reaction can occur even when discharge products, which are non-conductors, are deposited on the positive electrode as a result of the discharge reaction. Thus, when the positive electrode layer has a further reduced volume resistivity, a further improvement in the discharge capacity and the volumetric energy density is achieved.

The lower limit of the volume resistivity is not particularly limited, but, for example, may be 18 mOhm·cm or more. The lower limit of the volume resistivity is not lower than the powder resistivity of the carbon material, and thus, here, the powder resistivity of the carbon material is the lower limit.

It is sufficient that the positive electrode layer include the porous body described above. Optionally, the positive electrode layer may further include a binder for securing the porous body. The binder may be a material known in the art as a binder for a positive electrode layer of an air battery. Examples of such materials include polyvinylidene fluoride (PVDF) and polytetrafluoroethylene (PTFE). Although not particularly limited, the content of the binder in the positive electrode layer may be, for example, within a range of 1 mass% to 40 mass%.

The thickness of the positive electrode layer varies depending on the use of the air battery and thus is not particularly limited. For example, the thickness may be within a range of 2 µm to 500 µm or within a range of 5 µm to 300 µm.

The positive electrode layer can be produced by using a method, such as the following, for example. A coating composition in which a material of the porous body to be included in the positive electrode layer, a binder, and a sublimation powder are dispersed in a solvent is prepared and formed into a film. The sublimation powder and the solvent are removed by a heat treatment to form a porous film. The porous film is, for example, pressure-bonded onto a positive electrode current collector, which will be described below. The sublimation powder serves as a pore-forming agent. Thus, the porous film, produced as described above by using a sublimation powder, has a desired pore structure, that is, a pore structure having features described in the present embodiment.

### (2) Positive Electrode Current Collector

The positive electrode current collector collects current for the positive electrode layer. Thus, the material of the positive electrode current collector is not particularly limited provided that the material is electrically conductive and accordingly may be a material known in the art as a material for a positive electrode current collector of an air battery. Examples of the material of the positive electrode current collector include stainless steel, nickel, aluminum, iron, titanium, and carbon. Examples of the shape of the positive electrode current collector include foil form, plate form, and mesh (e.g., grid) form. Among these, the shape of the positive electrode current collector may be in mesh form in the present embodiment. The reason is that positive electrode current collectors in mesh form have excellent current collection efficiency. The positive electrode current collector in mesh form may be disposed within the positive electrode layer. Furthermore, the air battery of the present embodiment may further include another positive electrode current collector (e.g., current collector in foil form) for collecting electrical charge collected by the positive electrode current collector in mesh form. In the present embodiment, the cell case, which will be described later, may have multiple functions to serve as a positive electrode current collector.

The thickness of the positive electrode current collector may be, for example, within a range of 10 µm to 1000 µm or within a range of 20 µm to 400 µm.

### 2. Negative Electrode

As described above, the negative electrode includes a negative electrode layer and may further include a negative electrode current collector. The negative electrode layer and the negative electrode current collector will be described below.

### (1) Negative Electrode Layer

The negative electrode layer of the present embodiment at least includes a negative electrode active material capable of occluding and releasing lithium ions. The negative electrode active material is not particularly limited provided that the material contains lithium. Examples of such materials include elemental lithium (i.e., lithium metal), lithium-containing alloys, lithium-containing oxides, and lithium-containing nitrides. Examples of lithium-containing alloys include lithium aluminum alloys, lithium tin alloys, lithium lead alloys, and lithium silicon alloys. Examples of lithium-containing oxides include lithium titanium oxides. Examples of lithium-containing nitrides include lithium cobalt nitrides, lithium iron nitrides, and lithium manganese nitrides.

The negative electrode layer may consist of a negative electrode active material. Alternatively, the negative electrode layer may include a binder in addition to the negative electrode active material. For example, in the case that the negative electrode active material is in foil form, the negative electrode layer may consist of the negative electrode active material. On the other hand, in the case that the negative electrode active material is in powder form, the negative electrode layer may include the negative electrode active material and a binder. The binder may be a material known in the art as a binder for a negative electrode layer of an air battery. Examples of such materials include PVDFs and PTFEs. Although not particularly limited, the content of the binder in the negative electrode layer may be, for example, within a range of 1 mass% to 40 mass%. Examples of methods for forming the negative electrode layer by using a negative electrode active material in powder form include forming methods using, for example, a doctor blade method or a pressure-bonding method, as with the above-described method for forming the positive electrode layer.

### (2) Negative Electrode Current Collector

The negative electrode current collector collects current for the negative electrode layer. The material of the negative electrode current collector is not particularly limited provided that the material is electrically conductive and accordingly may be a material known in the art as a material for a negative electrode current collector of a lithium-air battery. Examples of the material of the negative electrode current collector include copper, stainless steel, nickel, and carbon. Examples of the shape of the negative electrode current collector include foil form, plate form, and mesh (e.g. grid) form. In the present embodiment, the cell case, which will be described later, may have multiple functions to serve as a negative electrode current collector. 3. Separator

The lithium-air battery of the present embodiment may include a separator disposed between the positive electrode (or positive electrode layer) and the negative electrode (or negative electrode layer). When a separator is disposed between the positive electrode and the negative electrode, the cell provides a high level of safety. The separator is not particularly limited provided that the separator has a function of electrically separating the positive electrode layer from the negative electrode layer. The separator may include, for example, a porous insulating material. Examples of such a porous insulating material include porous membranes each including, for example, polyethylene (PE) or polypropylene (PP), resin nonwoven fabrics each including, for example, PE or PP, nonwoven glass fiber fabrics, and nonwoven paper fabrics.

The separator may have a porosity within a range of 30 to 90%. When the porosity is not less than 30%, the separator, in the case that the electrolyte is to be held by the separator, may be able to hold the electrolyte sufficiently. On the other hand, when the porosity is not more than 90%, the separator may have sufficient strength. The porosity of the separator may be within a range of 35 to 60%.

### 4. Electrolyte Layer

The electrolyte layer is disposed between the positive electrode (or positive electrode layer) and the negative electrode (or negative electrode layer) and is a layer that transports lithium ions. Thus, the form of the electrolyte layer is not particularly limited provided that the electrolyte layer is lithium ion-conductive (i.e., lithium ion conductor). The electrolyte may be a solution system or a solid membrane system. Representative examples of the solution system include organic solvent systems each including a lithium salt serving as an electrolyte. Representative examples of the solid membrane system include solid polymer electrolyte systems each including a lithium salt.

In the case that the electrolyte layer is a solution system, the electrolyte layer may include a non-aqueous electrolyte solution prepared by dissolving a lithium salt in a non-aqueous solvent.

Examples of lithium salts that may be included in the non-aqueous electrolyte solution to serve as an electrolyte include lithium perchlorate (LiClO₄), lithium hexafluorophosphate (LiPF₆), lithium tetrafluoroborate (LiBF₄), lithium trifluoromethanesulfonate (LiCF₃SO₃), and lithium bis(trifluoromethanesulfonyl)amide (LiN(CF₃SO₂)₂); however, the lithium salt is not limited to these salts and may be a lithium salt known in the art as an electrolyte for a non-aqueous electrolyte solution of an air battery.

The amount of dissolved electrolyte with respect to a non-aqueous solvent is, for example, 0.5 to 2.5 mol/l. In the case that a solution system electrolyte layer (e.g., non-aqueous electrolyte solution) is used, the non-aqueous electrolyte solution may be impregnated into the separator to be held by the separator, as described above, so that the electrolyte layer can be formed.

The non-aqueous solvent may be a non-aqueous solvent known in the art as a non-aqueous solvent for a non-aqueous electrolyte solution of a lithium-air battery. The solvent may be, among others, an chain ether, such as tetraethylene glycol dimethyl ether. This is because chain ether solvents are not susceptible to a side reaction, other than the oxidation-reduction reaction of oxygen, in the positive electrode compared with carbonate-based solvents.

The electrolyte layer may further include a compound that serves as a redox mediator, which promotes decomposition or deposition of Li₂O₂. Examples of compounds that serve as a redox mediator include derivatives of 2,2,6,6-tetramethylpiperidine 1-oxyl (TEMPO). In the case that the electrolyte layer is a solution system, that is, an electrolyte solution, the electrolyte solution is present also in the pores of the porous body of the positive electrode layer. Thus, the compound serving as a redox mediator may be present in the pores of the porous body of the positive electrode layer.

### 5. Cell Case

The cell case for the lithium-air battery of the present embodiment is not particularly limited because it is sufficient that the cell case can house the positive electrode, the negative electrode, and the electrolyte layer, described above. Thus, the cell case for the air battery of the present embodiment is not limited to the cell case 11 illustrated in Figure and may be a cell case of any of a variety of types, such as coin types, plate types, cylindrical types, and laminate types. The cell case may be a cell case of an atmosphere-exposed type or may be a cell case of a sealed type. The atmosphere-exposed type cell case is a case that has a vent through which air can flow in and out and thus allows air to contact the positive electrode. On the other hand, in the instance that the case is a sealed-type cell case, the sealed-type cell case may be provided with a gas (e.g., air) supply tube and a gas (e.g., air) exhaust tube. In such a case, the gas to be supplied and exhausted may be dry gas. The gas may have a high oxygen concentration or may be pure oxygen (99.99%). The oxygen concentration may be increased during discharging and the oxygen concentration may be reduced during charging.

As described above, in the present embodiment, the detailed description refers to an example in which the air battery is a lithium-air battery; however, the air battery of the present disclosure may be employed as an air battery using a different metal, such as a sodium-air battery or a magnesium-air battery.

### EXAMPLES

In the following, the present disclosure will be described in more detail by way of examples. The examples described below are merely illustrative and the present disclosure is not limited to the examples described below.

### Example 1-1

"Ketjen Black EC600JD", manufactured by Lion Specialty Chemicals Co., Ltd., was used as a material for forming the carbon-containing porous body. The Ketjen black, "Newcol 1308-FA (90)", and "Fumaric acid" were mixed and stirred to obtain a mixture. Newcol 1308-FA (90), manufactured by Nippon Nyukazai Co., Ltd., was used as a surfactant solution. "Fumaric acid", manufactured by NIPPON SHOKUBAI CO., LTD, was used as a sublimation powder that served as a pore-forming agent. The fumaric acid was ground into a powder form in advance in a jet mill and used as a sublimation powder. The mass ratio between the Ketjen black and the sublimation powder was 7.7:33 (Ketjen black:sublimation powder). The resultant mixture was cooled, and thereafter "Fluon®PTFE AD 911E", a binder manufactured by Asahi Glass Co., Ltd., was added to the mixture, and the mixture was stirred again. The binder was added in an amount such that the mass ratio between the Ketjen black and the binder was 7:3 (Ketjen black:binder). The resultant mixture was rolled in a roll press to produce a sheet. The resultant sheet was fired at 320°C in a firing furnace to remove moisture, the surfactant, and the sublimation powder. The sheet was rolled in a roll press again to adjust the thickness to 200 µm, and thus a positive electrode layer was obtained. A SUS304 mesh (manufactured by The Nilaco Corporation), which served as a positive electrode current collector, was attached to the positive electrode layer, and the resultant was used as the positive electrode. The pore diameter distribution of the sheet was determined by a method described later. From the obtained pore diameter distribution, the first pore volume and the second pore volume were also determined. The non-aqueous electrolyte solution used was a solution prepared by dissolving lithium bis(trifluoromethanesulfonyl)amide (LiTFSA, manufactured by KISHIDA CHEMICAL Co., Ltd.) in tetraethylene glycol dimethyl ether (TEGDME, manufactured by KISHIDA CHEMICAL Co., Ltd.). LiTFSA was used as an electrolyte. TEGDME was used as a non-aqueous solvent. The non-aqueous electrolyte solution was obtained by adding, to TEGDME, LiTFSA to a concentration of 1 mol/L and stirring the resultant overnight in a dry air atmosphere with a dew point of -50°C or lower to accomplish mixing and dissolving. The separator used was a glass fiber separator. Lithium metal (manufactured by The Honjo Chemical Corporation) was used as the negative electrode layer. A SUS304 mesh, which served as a negative electrode current collector, was attached to the negative electrode layer, and the resultant was used as the negative electrode. The positive electrode, the separator, the non-aqueous electrolyte solution, and the negative electrode were arranged in a manner illustrated in Figure. Thus, an air battery was produced. A discharge test was conducted on the produced air battery. After the test, the cell was disassembled and the thickness of the positive electrode was measured to measure the swelling ratio of the positive electrode. The swelling ratio of the positive electrode was calculated based on the thickness of the pre-test sheet. The volumetric energy density was calculated by using the discharge capacity per unit apparent volume of the positive electrode, and the average discharge voltage. The discharge capacity per unit apparent volume of the positive electrode was calculated by using the apparent volume of the positive electrode. The apparent volume of the positive electrode was measured after the discharge test. Table 1 shows: (1) the results of the determination of the first pore volume and the second pore volume of the sheet, which was produced to serve as the positive electrode layer, (2) the results of the discharge test conducted on the air battery, (3) the swelling ratio of the positive electrode, and (4) the volumetric energy densities.

### Example 1-2

A positive electrode (positive electrode layer) and an air battery were produced in the same manner as in Example 1-1 except that the amount of the sublimation powder added was reduced. Specifically, the mass ratio between the Ketjen black and the sublimation powder was 7.7:22 (Ketjen black:sublimation powder). Table 1 shows: (1) the results of the determination of the first pore volume and the second pore volume of the sheet which was produced to serve as the positive electrode layer, (2) the results of the discharge test conducted on the air battery, (3) the swelling ratio of the positive electrode layer, and (4) the volumetric energy densities.

### Example 1-3

A positive electrode (positive electrode layer) and an air battery were produced in the same manner as in Example 1-1 except that the amount of the sublimation powder added was reduced. Specifically, the mass ratio between the Ketjen black and the sublimation powder was 7:5 (Ketjen black:sublimation powder). Table 1 shows: (1) the results of the determination of the first pore volume and the second pore volume of the sheet, which was produced to serve as the positive electrode layer, (2) the results of the discharge test conducted on the air battery, (3) the swelling ratio of the positive electrode layer, and (4) the volumetric energy densities.

### Comparative Example 1-1

A positive electrode (positive electrode layer) and an air battery were produced in the same manner as in Example 1-1 except that no sublimation powder was added. Table 1 shows: (1) the results of the determination of the first pore volume and the second pore volume of the sheet, which was produced to serve as the positive electrode layer, (2) the results of the discharge test conducted on the air battery, (3) the swelling ratio of the positive electrode layer, and (4) the volumetric energy densities.

### Example 2-1

"Ketjen Black EC600JD", manufactured by Lion Specialty Chemicals Co., Ltd., and "CNovel® (3)010", manufactured by Toyo Tanso Co., Ltd., were used as materials for forming the carbon-containing porous body. The Ketjen black, CNovet, "Newcol 1308-FA (90)", and "Fumaric acid" were mixed and stirred to obtain a mixture. "Newcol 1308-FA (90)", manufactured by Nippon Nyukazai Co., Ltd., was used as a surfactant solution. "Fumaric acid", manufactured by NIPPON SHOKUBAI CO., LTD, was used as a sublimation powder that served as a pore-forming agent. The fumaric acid was ground into a powder form in advance in a jet mill and used as a sublimation powder. The mass ratio between the Ketjen black, CNovel, and the sublimation powder was 4.4:3.3:33 in the order stated. The resultant mixture was cooled, and thereafter "Fluon®PTFE AD 911E", a binder manufactured by Asahi Glass Co., Ltd., was added to the mixture, and the mixture was stirred again. The binder was added in an amount such that the mass ratio between the Ketjen black, CNovel, and the binder was 4:3:3 in the order stated. The resultant mixture was rolled in a roll press to produce a sheet. The resultant sheet was fired at 320°C in a firing furnace to remove moisture, the surfactant, and the sublimation powder. The sheet was rolled in a roll press again to adjust the thickness to 200 µm, and thus a positive electrode layer was obtained. The volume resistivity of the positive electrode layer in a direction parallel to a major surface of the positive electrode layer, as measured on the major surface was determined by methods described later. The pore diameter distribution of the positive electrode layer was also determined by methods described later. The "volume resistivity of the positive electrode layer in a direction parallel to a major surface of the positive electrode layer, as measured on the major surface" is hereinafter referred to as "volume resistivity of the positive electrode layer". From the obtained pore diameter distribution, the first pore volume and the second pore volume were also determined. A SUS304 mesh (manufactured by The Nilaco Corporation), which served as a positive electrode current collector, was attached to the positive electrode layer, and the resultant was used as the positive electrode. The non-aqueous electrolyte solution used was a solution prepared by dissolving lithium bis(trifluoromethanesulfonyl)amide (LiTFSA, manufactured by KISHIDA CHEMICAL Co., Ltd.) in tetraethylene glycol dimethyl ether (TEGDME, manufactured by KISHIDA CHEMICAL Co., Ltd.). LiTFSA was used as an electrolyte. TEGDME was used as a non-aqueous solvent. The non-aqueous electrolyte solution was obtained by adding, to TEGDME, LiTFSA to a concentration of 1 mol/L and stirring the resultant overnight in a dry air atmosphere with a dew point of -50°C or lower to accomplish mixing and dissolving. The separator used was a glass fiber separator. Lithium metal (manufactured by The Honjo Chemical Corporation) was used as the negative electrode layer. A SUS304 mesh, which served as a negative electrode current collector, was attached to the negative electrode layer, and the resultant was used as the negative electrode. The positive electrode, the separator, the non-aqueous electrolyte solution, and the negative electrode were arranged in a manner illustrated in Figure. Thus, an air battery was produced. A discharge test was conducted on the produced air battery. After the test, the cell was disassembled and the thickness of the positive electrode was measured to measure the swelling ratio of the positive electrode. The swelling ratio of the positive electrode was calculated based on the thickness of the pre-test sheet. The volumetric energy density was calculated by using the discharge capacity per unit apparent volume of the positive electrode, and the average discharge voltage. The discharge capacity per unit apparent volume of the positive electrode was calculated by using the apparent volume of the positive electrode. The apparent volume of the positive electrode was measured after the discharge test. Table 2 shows: (1) the results of the determination of the first pore volume and the second pore volume of the sheet, which was produced to serve as the positive electrode layer, (2) the amount of surface functional groups of the carbon, (3) the volume resistivity of the positive electrode layer, (4) the results of the discharge test conducted on the air battery, and (5) the volumetric energy densities. The amount of surface functional groups of the carbon included in the porous body, which was included in the positive electrode layer, was calculated by determining, by a method described later, the amounts of surface functional groups of the Ketjen black and CNovel, which were used as materials to form the porous body. The amount of surface functional groups is also shown in Table 2.

### Example 2-2

A positive electrode (positive electrode layer) and an air battery were produced in the same manner as in Example 2-1 except that (1) no sublimation powder was added and (2) the mass ratio between the Ketjen black, CNovel, and the binder was changed to, in the order stated, 1:6:3. Table 2 shows: (1) the results of the determination of the first pore volume and the second pore volume of the sheet, which was produced to serve as the positive electrode layer, (2) the amount of surface functional groups of the carbon, (3) the volume resistivity of the positive electrode layer, (4) the results of the discharge test conducted on the air battery, and (5) the volumetric energy densities.

### Example 2-3

A positive electrode (positive electrode layer) and an air battery were produced in the same manner as in Example 2-1 except that (1) no sublimation powder was added and (2) the mass ratio between the Ketjen black, CNovel, and the binder was changed to, in the order stated, 4:3:3. Table 2 shows: (1) the results of the determination of the first pore volume and the second pore volume of the sheet, which was produced to serve as the positive electrode layer, (2) the amount of surface functional groups of the carbon, (3) the volume resistivity of the positive electrode layer, (4) the results of the discharge test conducted on the air battery, and the (5) volumetric energy densities.

### Example 2-4

A positive electrode (positive electrode layer) and an air battery were produced in the same manner as in Example 2-1 except that (1) no sublimation powder was added and (2) the mass ratio between the Ketjen black, CNovel, and the binder was changed to, in the order stated, 6:1:3. Table 2 shows: (1) the results of the determination of the first pore volume and the second pore volume of the sheet, which was produced to serve as the positive electrode layer, (2) the amount of surface functional groups of the carbon, (3) the volume resistivity of the positive electrode layer, (4) the results of the discharge test conducted on the air battery, and (5) the volumetric energy densities.

### Example 2-5

A positive electrode (positive electrode layer) and an air battery were produced in the same manner as in Example 2-1 except that (1) neither Ketjen black nor a sublimation powder was added and (2) the mass ratio between CNovel and the binder was changed to, in the order stated, 7:3. Table 2 shows: (1) the results of the determination of the first pore volume and the second pore volume of the sheet, which was produced to serve as the positive electrode layer, (2) the amount of surface functional groups of the carbon, (3) the volume resistivity of the positive electrode layer, (4) the results of the discharge test conducted on the air battery, and (5) the volumetric energy densities.

### Example 2-6

A positive electrode (positive electrode layer) and an air battery were produced in the same manner as in Example 2-1 except that (1) CNovel was not added, (2) the mass ratio between the Ketjen black and the sublimation powder was, in the order stated, 7.7:33, and (3) the mass ratio between the Ketjen black and the binder was changed to, in the order stated, 7:3. Table 2 shows: (1) the results of the determination of the first pore volume and the second pore volume of the sheet, which was produced to serve as the positive electrode layer, (2) the amount of surface functional groups of the carbon, (3) the volume resistivity of the positive electrode layer, (4) the results of the discharge test conducted on the air battery, and (5) the volumetric energy densities.

### Example 2-7

A positive electrode (positive electrode layer) and an air battery were produced in the same manner as in Example 2-1 except that (1) CNovel was not added, (2) the mass ratio between the Ketjen black and the sublimation powder was, in the order stated, 7.7:22, and (3) the mass ratio between the Ketjen black and the binder was changed to, in the order stated, 7:3. Table 2 shows: (1) the results of the determination of the first pore volume and the second pore volume of the sheet, which was produced to serve as the positive electrode layer, (2) the amount of surface functional groups of the carbon, (3) the volume resistivity of the positive electrode layer, (4) the results of the discharge test conducted on the air battery, and (5) the volumetric energy densities.

### Comparative Example 2-1

A positive electrode (positive electrode layer) and an air battery were produced in the same manner as in Example 2-1 except that (1) neither CNovel nor a sublimation powder was added and (2) the mass ratio between the Ketjen black and the binder was changed to, in the order stated, 7:3. Table 2 shows: (1) the results of the determination of the first pore volume and the second pore volume of the sheet, which was produced to serve as the positive electrode layer, (2) the amount of surface functional groups of the carbon, (3) the volume resistivity of the positive electrode layer, (4) the results of the discharge test conducted on the air battery, and (5) the volumetric energy densities.

In Examples and Comparative Examples, measurements of the pore diameter distribution, the first pore volume, and the second pore volume of the sheet produced to serve as the positive electrode layer, a measurement of the volume resistivity of the positive electrode layer, a measurement of the amount of surface functional groups of the carbon included in the porous body, which was included in the positive electrode layer, a discharge test of the air battery, and a calculation of the volumetric energy density were performed. The methods used to perform the measurements, the test, and the calculation will be specifically described below. The measurement of the volume resistivity of the positive electrode layer and the measurement of the amount of surface functional groups of the carbon included in the porous body were performed on Examples 2-1 to 2-7 and Comparative Example 2-1.

### Pore Diameter Distribution, First Pore Volume, and Second Pore Volume

A mercury porosimetry measurement was performed on the sheet produced to serve as the positive electrode layer, and thus the pore diameter distribution was determined and also the first pore volume and the second pore volume were determined.

### Discharge Test

After the air battery was held under an atmosphere of oxygen for 20 minutes or more, the discharge test was conducted. For the test, the current density was 0.1 mA/cm² and the discharge cutoff voltage was 2.0V. The discharge capacity is indicated in terms of the capacity per unit mass of the sheet produced to serve as the positive electrode layer.

### Volume Resistivity of Positive Electrode Layer

With regard to the sheet produced to serve as the positive electrode layer, the volume resistivity of the positive electrode layer was measured by using a low resistivity meter (MCP-T610) and a 4-point probe (ECP probe), manufactured by Mitsubishi Chemical Analytech, Co., Ltd. The volume resistivity of the positive electrode layer was measured on a major surface of the positive electrode layer. Amount of Surface Functional Groups

The amount of surface functional groups of the carbon included in the porous body of the positive electrode layer was calculated by using the measured value of the amount of surface functional groups of the Ketjen black used to produce the porous body and the measured value of the amount of surface functional groups of CNovel used to produce the porous body. For Ketjen black and for CNovel, separately, a back titration was performed by a Boehm method, in a condition in which hydrochloric acid was added under an inert atmosphere, and by using a sodium hydroxide solution. For the back titration, an automatic titrator manufactured by Kyoto Electronics Manufacturing Co., Ltd. was used. The amount of surface functional groups of the Ketjen black and the amount of surface functional groups of CNovel were each measured by determining the total amount of acidic functional groups from the consumption of the sodium hydroxide mentioned above. By using the amount of surface functional groups of the Ketjen black and the amount of surface functional groups of CNovel, the amount of surface functional groups of the carbon was calculated, for each of the examples and the comparative example, based on the ratio between the Ketjen black and CNovel of each of the examples and the comparative example.

### Volumetric Energy Density

The average of the voltages measured from the start of the discharge test to the end was designated as the average discharge voltage. After completion of the discharge test, the thickness and the area of the positive electrode were measured by using a thickness gauge. A value was calculated by multiplying the measured thickness of the positive electrode by the measured area. The value was used as the apparent volume of the positive electrode. As the apparent volume of the positive electrode, a volume A and a volume B were used. The volume A was determined by using the thickness of the positive electrode. The volume B was determined by using the sum of the thickness of the positive electrode current collector layer and the thickness of the positive electrode layer. That is, the volume A was the apparent volume of the positive electrode layer alone, and the volume B was the apparent volume of the positive electrode current collector layer and positive electrode layer. A value was calculated by dividing the discharge capacity obtained in the discharge test described above by the apparent volume of the positive electrode (volume A or volume B) described above. The value was designated as a discharge capacity per unit apparent volume (mAh/cm³) of the positive electrode. The volumetric energy density (Wh/L) was calculated by multiplying the average discharge voltage (V) by the discharge capacity per unit apparent volume (mAh/cm³) of the positive electrode. Table 1 and Table 2 show a volumetric energy density A and a volumetric energy density B. The volumetric energy density A was calculated by using the volume A as the apparent volume of the positive electrode and the volumetric energy density B was calculated by using the volume B as the apparent volume of the positive electrode.

**Table 1**

| | First pore volume [cm³/g] | Second pore volume [cm³/g] | Pore volume ratio (second pore volume/first pore volume) | Sum of first pore volume and second pore volume [cm³/g] | Discharge capacity [mAh/g] | Swelling ratio of positive electrode [%] | Volumetric energy density A [Wh/L] | Volumetric energy density B [Wh/L] |
|---|---|---|---|---|---|---|---|---|
| Example 1-1 | 1.0 | 3.0 | 3.0 | 4.0 | 3425 | 139 | 1681 | 1378 |
| Example 1-2 | 1.2 | 2.1 | 1.8 | 3.3 | 2981 | 143 | 1593 | 1325 |
| Example 1-3 | 1.2 | 1.4 | 1.2 | 2.6 | 2553 | 143 | 1503 | 1254 |
| Comparative Example 1-1 | 1.3 | 1.2 | 0.92 | 2.5 | 2322 | 150 | 1359 | 1163 |

As can be seen from the results shown in Table 1, the air battery of Comparative Example 1-1 exhibited a high positive electrode swelling ratio and a low volumetric energy density. In addition, the air battery of Comparative Example 1-1 exhibited a low discharge capacity.

In contrast, the air batteries of Examples 1-1 to 1-3 exhibited a reduced positive electrode swelling ratio in association with the increased second pore volume, and the air batteries exhibited an improved discharge capacity and an improved volumetric energy density. From these results, it was found that the air batteries of Examples 1-1 to 1-3 had both a high discharge capacity and a high volumetric energy density. In each of Examples 1-1 to 1-3, the positive electrode included a porous body that served as the positive electrode layer and, in the porous body, the second pore volume was greater than the first pore volume.

**Table 2**

| | First pore volume [cm³/g] | Second pore volume [cm³/g] | Pore volume ratio (second pore volume/first pore volume) | Amount of surface functional groups [mmol/g] | Volume resistivity [mΩ·cm] | Discharge capacity [mAh/g] | Volumetric energy density A [Wh/L] | Volumetric energy density B [Wh/L] |
|---|---|---|---|---|---|---|---|---|
| Example 2-1 | 0.94 | 2.46 | 2.6 | 0.77 | 2162 | 3732 | 2385 | 2170 |
| Example 2-2 | 1.18 | 1.83 | 1.6 | 1.34 | 5126 | 2933 | 1932 | 1811 |
| Example 2-3 | 1.05 | 1.42 | 1.4 | 0.77 | 698 | 2597 | 1954 | 1835 |
| Example 2-4 | 1.07 | 1.14 | 1.1 | 0.38 | 326 | 2366 | 1755 | 1648 |
| Example 2-5 | 1.62 | 2.07 | 1.3 | 1.53 | 26020 | 4506 | 1699 | 1437 |
| Example 2-6 | 1.05 | 2.99 | 3.0 | 0.19 | 624 | 3425 | 1681 | 1378 |
| Example 2-7 | 1.18 | 2.11 | 1.8 | 0.19 | 500 | 2981 | 1593 | 1325 |
| Comparative Example 2-1 | 1.29 | 1.20 | 0.92 | 0.19 | 291 | 2322 | 1359 | 1163 |

As with the results of Examples 1-1 to 1-3 and Comparative Example 1-1, it was found that the air batteries of Examples 2-1 to 2-7 had both a high discharge capacity and a high volumetric energy density compared with the air battery of Comparative Example 2-1. In each of Examples 2-1 to 2-7, the positive electrode included a porous body that served as the positive electrode layer and, in the porous body, the second pore volume was greater than the first pore volume.

In each of the porous bodies of Examples 2-1 to 2-4, the second pore volume was greater than the first pore volume and the amount of surface functional groups of the included carbon was within the range of 0.3 mmol/g or more and 1.4 mmol/g or less. In addition, in each of the positive electrodes of Examples 2-1 to 2-4, the volume resistivity of the positive electrode layer was reduced and was 5126 mOhm·cm or less. As shown in Table 2, the air batteries of Examples 2-1 to 2-4, which included such a positive electrode, had a high discharge capacity and a high volumetric energy density, both at a high level.

A comparison among the positive electrodes of Examples 2-1 to 2-4 revealed that a positive electrode having a greater V2/V1 value, where V1 represents the first pore volume and V2 represents the second pore volume, had a higher volumetric energy density.

In the porous body of the positive electrode of Example 2-5, the second pore volume was greater than the first pore volume. In the positive electrode of Example 2-5, however, the amount of surface functional groups of the carbon included in the porous body was 1.53 mmol/g, which was large and outside of the range of 0.3 mmol/g or more and 1.4 mmol/g or less. In addition, the positive electrode layer of the positive electrode of Example 2-5 had a higher volume resistivity than the positive electrode layers of Examples 2-1 to 2-4. The air battery of Example 2-5, which included such a positive electrode, had a high discharge capacity but had a lower volumetric energy density than the air batteries of Examples 2-1 to 2-4.

In each of the porous bodies of the positive electrodes of Examples 2-6 and 2-7, the second pore volume was greater than the first pore volume. In each of the positive electrodes of Examples 2-6 and 2-7, however, the amount of surface functional groups of the carbon included in the porous body was 0.19 mmol/g, which was small and outside of the range of 0.3 mmol/g or more and 1.4 mmol/g or less. The air batteries of Examples 2-6 and 2-7, which included such a positive electrode, had a high discharge capacity but had a lower volumetric energy density than the air batteries of Examples 2-1 to 2-4.

In the porous body of the positive electrode of Comparative Example 2-1, the second pore volume was smaller than the first pore volume. In addition, in the positive electrode of Comparative Example 2-1, the amount of surface functional groups of the carbon included in the porous body was 0.19 mmol/g, which was small and outside of the range of 0.3 mmol/g or more and 1.4 mmol/g or less. The air battery of Comparative Example 2-1, which included such a positive electrode, had a relatively high discharge capacity but had a very low volumetric energy density.

From the results shown in Table 2, it was found that air batteries including a positive electrode including a porous body that serves as the positive electrode layer and in which the second pore volume is greater than the first pore volume and the amount of surface functional groups of the included carbon is within the range of 0.3 mmol/g or more and 1.4 mmol/g or less have a high discharge capacity and a high volumetric energy density, both at a high level.

An air battery of an embodiment of the present disclosure has a high discharge capacity and a high volumetric energy density. Thus, the air battery of the present disclosure is useful as a high-capacity cell.

## Claims

1. A positive electrode for an air battery, the positive electrode comprising a porous body comprising carbon, wherein the carbon is a mixture of a plurality of carbon materials having amounts of surface functional groups different from each other,
wherein an amount of surface functional groups of the carbon comprised in the porous body is 0.3 mmol/g or more and 1.4 mmol/g or less, wherein the amount of surface functional groups is determined by back titration using a Boehm method, in a condition in which hydrochloric acid is added under an inert atmosphere, and by using a sodium hydroxide solution so as to determine the total amount of acidic functional groups from the consumption of the sodium hydroxide,
wherein the porous body includes first pores each having a pore diameter of 4 nm or more and less than 100 nm and second pores each having a pore diameter of 100 nm or more and 10 µm or less, wherein the pore diameter is determined using mercury porosity measurement, and
in the porous body, V1 and V2 satisfy V2/V1 ≥ 1.1, wherein V2 represents a second pore volume determined using mercury porosity measurement, and V1 represents a first pore volume determined using mercury porosity measurement, the second pore volume being a cumulative pore volume of the second pores, the first pore volume being a cumulative pore volume of the first pores.

2. The positive electrode according to Claim 1, wherein a sum of the first pore volume and the second pore volume is 2.6 cm³/g or more and 4.0 cm³/g or less.

3. The positive electrode according to Claim 1 or 2, wherein the second pore volume is 1.4 cm³/g or more and 3.0 cm³/g or less.

4. The positive electrode according to Claim 1, wherein the amount of the surface functional groups of the carbon comprised in the porous body is 0.38 mmol/g or more and 1.34 mmol/g or less, wherein the amount of surface functional groups is determined by back titration using a Boehm method, in a condition in which hydrochloric acid is added under an inert atmosphere, and by using a sodium hydroxide solution so as to determine the total amount of acidic functional groups from the consumption of the sodium hydroxide.

5. The positive electrode according to any one of Claims 1 to 4,
wherein the positive electrode is configured to use oxygen from air as a positive electrode active material and includes a positive electrode layer configured to oxidize and reduce the oxygen,
the porous body is included in the positive electrode layer, and
a volume resistivity of the positive electrode layer in a direction parallel to a major surface of the positive electrode layer, as measured on the major surface, is 5500 mOhm·cm or less.

6. The positive electrode according to Claim 5, wherein the volume resistivity is 2500 mOhm·cm or less.

7. The positive electrode according to any one of Claims 1 to 6, wherein V1 and V2 satisfy V2/V1 ≥ 1.4, where V1 represents the first pore volume and V2 represents the second pore volume.

8. The positive electrode according to Claim 7, wherein V1 and V2 satisfy V2/V1 ≥ 1.5.

9. The positive electrode according to Claim 8, wherein V1 and V2 satisfy V2/V1 ≥ 2.5.

10. The positive electrode according to Claim 9, wherein V1 and V2 satisfy V2/V1 ≥ 3.

11. An air battery comprising:
the positive electrode according to any one of Claims 1 to 10;
a negative electrode configured to occlude and release metal ions; and
an electrolyte layer disposed between the positive electrode and the negative electrode.

## Patentansprüche

1. Positive Elektrode für eine Luftbatterie, wobei die positive Elektrode einen porösen Körper mit Kohlenstoff aufweist, wobei der Kohlenstoff eine Mischung aus mehreren Kohlenstoffmaterialien mit Anteilen von oberflächenfunktionalen Gruppen ist, die sich voneinander unterschieden,
wobei ein Anteil der oberflächenfunktionalen Gruppen des Kohlenstoffs in dem porösen Körper 0,3 mmol/g oder größer und 1,4 mmol/g oder kleiner ist, wobei der Anteil an oberflächenfunktionalen Gruppen durch Rücktitrierung unter Anwendung eines Boehm-Verfahrens in einem Zustand, in welchem Salzsäure in einer inerten Atmosphäre zugesetzt wird, und durch Verwendung einer Natriumhydroxidlösung ermittelt wird, um den Gesamtanteil an sauren funktionalen Gruppen aus dem Verbrauch des Natriumhydroxids zu ermitteln, wobei
der poröse Körper erste Poren mit jeweils einem Porendurchmesser von 4 nm oder größer und 100 nm oder kleiner und zweite Poren mit jeweils einem Porendurchmesser von 100 nm oder größer und 10 µm oder kleiner aufweist, wobei der Porendurchmesser unter Anwendung einer Quecksilberporositätsmessung ermittelt wird, und
in dem porösen Körper V1 und V2 die Bedingung V2/V1 ≥ 1,1 erfüllen, wobei V2 ein Volumen an zweiten Poren repräsentiert, das unter Anwendung einer Quecksilberporositätsmessung ermittelt wird, und V1 ein Volumen an ersten Poren repräsentiert, das unter Anwendung der Quecksilberporositätsmessung ermittelt wird, wobei das Volumen an zweiten Poren ein kumulatives Porenvolumen der zweiten Poren ist und das Volumen an ersten Poren ein kumulatives Porenvolumen der ersten Poren ist.

2. Positive Elektrode nach Anspruch 1, wobei eine Summe des Volumens an ersten Poren und des Volumens an zweiten Poren 2,6 cm³/g oder größer und 4,0 cm³/g oder kleiner ist.

3. Positive Elektrode nach Anspruch 1 oder 2, wobei das Volumen an zweiten Poren 1,4 cm³/g oder größer und 3,0 cm³/g oder kleiner ist.

4. Positive Elektrode nach Anspruch 1, wobei der Anteil der oberflächenfunktionalen Gruppen des Kohlenstoffs, der in dem porösen Körper enthalten ist, 0,38 mmol/g oder größer und 1,34 mmol/g oder kleiner ist, wobei der Anteil an oberflächenfunktionalen Gruppen durch eine Rücktitrierung unter Anwendung eines Boehm-Verfahrens in einem Zustand, in welchem Salzsäure unter inerter Atmosphäre zugesetzt wird, und durch Verwendung einer Natriumhydroxidlösung ermittelt wird, um den gesamten Anteil von sauren funktionalen Gruppen aus dem Verbrauch des Natriumhydroxids zu ermitteln.

5. Positive Elektrode nach einem der Ansprüche 1 bis 4, wobei die positive Elektrode ausgebildet ist, Sauerstoff aus Luft als ein aktives Material der positiven Elektrode zu nutzen, und eine positive Elektrodenschicht enthält, die ausgebildet ist, den Sauerstoff zu oxidieren und zu reduzieren,
der poröse Körper in der positiven Elektrodenschicht enthalten ist, und
ein Volumenwiderstand der positiven Elektrodenschicht in einer Richtung parallel zu einer Hauptoberfläche der positiven Elektrodenschicht bei Messung auf der Hauptoberfläche 5500 mOhm·cm oder weniger beträgt.

6. Positive Elektrode nach Anspruch 5, wobei der Volumenwiderstand 2500 mOhm·cm oder weniger ist.

7. Positive Elektrode nach einem der Ansprüche 1 bis 6, wobei V1 und V2 die Bedingung V2/V1 ≥ 1,4 erfüllen, wobei V1 das Volumen an ersten Poren und V2 das Volumen an zweiten Poren repräsentiert.

8. Positive Elektrode nach Anspruch 7, wobei V1 und V2 die Bedingung V2/V1 ≥ 1,5 erfüllen.

9. Positive Elektrode nach Anspruch 8, wobei V1 und V2 die Bedingung V2/V1 ≥ 2,5 erfüllen.

10. Positive Elektrode nach Anspruch 9, wobei V1 und V2 die Bedingung V2/V1 ≥ 3 erfüllen.

11. Luftbatterie, mit:
einer positiven Elektrode nach einem der Ansprüche 1 bis 10:
einer negativen Elektrode, die ausgebildet ist, Metallionen einzuschließen und freizugeben; und
einer Elektrolytschicht, die zwischen der positiven Elektrode und der negativen Elektrode angeordnet ist.

## Revendications

1. Électrode positive pour une batterie à air, l'électrode positive comprenant un corps poreux comprenant du carbone, où le carbone est un mélange d'une pluralité de matériaux carbonés ayant des quantités de groupes fonctionnels de surface différentes l'une de l'autre,
où une quantité de groupes fonctionnels de surface du carbone compris dans le corps poreux est de 0,3 mmole/g ou plus et de 1,4 mmole/g ou moins, la quantité de groupes fonctionnels de surface étant déterminée par rétrotitrage en utilisant un procédé de Boehm, dans un état dans lequel de l'acide chlorhydrique est ajouté sous une atmosphère inerte, et en utilisant une solution d'hydroxyde de sodium afin de déterminer la quantité totale de groupes fonctionnels acides à partir de la consommation de l'hydroxyde de sodium,
le corps poreux comprenant de premiers pores ayant chacun un diamètre de pore de 4 nm ou plus et inférieur à 400 nm et les seconds pores ayant chacun un diamètre de pore de 100 nm ou plus et de 10 µm ou moins, le diamètre de pore étant déterminé en utilisant la mesure de porosité au mercure, et
dans le corps poreux, V1 et V2 satisfont V2/V1 ≥ 1,1, où V2 représente un second volume de pore déterminé en utilisant la mesure de porosité au mercure, et V1 représente un premier volume de pore déterminé en utilisant la mesure de porosité au mercure, le second volume de pore étant un volume de pore cumulé des seconds pores, le premier volume de pore étant un volume de pore cumulé des premiers pores.

2. Électrode positive selon la revendication 1, dans laquelle une somme du premier volume de pore et du second volume de pore est de 2,6 cm³/g ou plus et de 4,0 cm³/g ou moins.

3. Électrode positive selon la revendication 1 ou 2, dans laquelle le second volume de pore est de 1,4 cm³/g ou plus et de 3,0 cm³/g ou moins.

4. Électrode positive selon la revendication 1, dans laquelle la quantité de groupes fonctionnels de surface du carbone compris dans le corps poreux est de 0,38 mmole/g ou plus et de 1,34 mmole/g ou moins, la quantité de groupes fonctionnels de surface étant déterminée par rétrotitrage en utilisant un procédé de Boehm, dans un état dans lequel de l'acide chlorhydrique est ajouté sous une atmosphère inerte, et en utilisant une solution d'hydroxyde de sodium afin de déterminer la quantité totale de groupes fonctionnels acides à partir de la consommation de l'hydroxyde de sodium.

5. Électrode positive selon l'une quelconque des revendications 1 à 4,
l'électrode positive étant configurée pour utiliser l'oxygène de l'air comme matériau actif d'électrode positive et comprenant une couche d'électrode positive configurée pour oxyder et réduire l'oxygène,
le corps poreux est inclus dans la couche d'électrode positive, et
une résistivité volumique de la couche d'électrode positive dans un sens parallèle à une surface majeure de la couche d'électrode positive, telle que mesurée sur la surface majeure, étant de 5 500 mOhm·cm ou moins.

6. Électrode positive selon la revendication 5, dans laquelle la résistivité volumique est de 2 500 mOhm·cm ou moins.

7. Électrode positive selon l'une quelconque des revendications 1 à 8, dans laquelle V1 et V2 satisfont V2/V1 ≥ 1,4, où V1 représente le premier volume de pore et V2 représente le second volume de pore.

8. Électrode positive selon la revendication 7, dans laquelle V1 et V2 satisfont V2/V1 ≥ 1,5.

9. Électrode positive selon la revendication 8, dans laquelle V1 et V2 satisfont V2/V1 ≥ 2,5.

10. Électrode positive selon la revendication 9, dans laquelle V1 et V2 satisfont V2/V1 ≥ 3.

11. Batterie à air comprenant :
l'électrode positive selon l'une quelconque des revendications 1 à 10 ;
une électrode négative configurée pour occlure et libérer des ions métalliques ; et
une couche d'électrolyte disposée entre l'électrode positive et l'électrode négative.
